Europäisches Patentamt

European Patent Office

Office européen des brevets

(19)

(11) Numéro de publication: **0 240 388**

**B1**

(12) **FASCICULE DE BREVET EUROPEEN**

(45) Date de publication du fascicule du brevet: **30.01.91**

(51) Int. Cl.⁵: **A 47 C 31/02**

(21) Numéro de dépôt: **87400455.9**

(22) Date de dépôt: **02.03.87**

(54) Siège, notamment pour véhicule automobile.

(30) Priorité: **02.04.86 FR 8604721**

(43) Date de publication de la demande:
**07.10.87 Bulletin 87/41**

(45) Mention de la délivrance du brevet:
**30.01.91 Bulletin 91/05**

(84) Etats contractants désignés:
**DE ES GB IT**

(56) Documents cités:
**DE-B-1 942 308**
**FR-A-1 293 661**
**FR-A-2 454 780**
**US-A-3 037 834**
**US-A-3 630 572**
**US-A-3 794 378**

(73) Titulaire: **AUTOMOBILES PEUGEOT**
**75, avenue de la Grande Armée**
**F-75116 Paris (FR)**
(73) Titulaire: **AUTOMOBILES CITROEN**
**62 Boulevard Victor-Hugo**
**F-92200 Neuilly-sur-Seine (FR)**

(72) Inventeur: **Chanoine, Michel**
**App. 201, esc. 5 Résidence Les Lionceaux**
**F-78560 Le Port Marly (FR)**
Inventeur: **Picard, Jean**
**69, rue Jules Michelet**
**F-92700 Colombes (FR)**

(74) Mandataire: **Moncheny, Michel et al**
**c/o Cabinet Lavoix 2 Place d'Estienne d'Orves**
**F-75441 Paris Cedex 09 (FR)**

Courier Press, Leamington Spa, England.

EP 0 240 388 B1

## Description

L'invention concerne un siège de l'espèce définie par le préambule de la revendication 1 destiné, notamment, mais non exclusivement, à l'équipement d'un véhicule automobile.

L'invention s'applique à un siège constitué d'un coussin sur lequel on s'assied et d'un dossier, chacun de ces deux éléments constitutifs du siège étant pourvu d'une matelassure recouverte d'une coiffe; le siège comporte également, de façon habituelle, une armature et/ou des inserts rigides de renforcement placés dans la matelassure.

Afin d'assurer une bonne tenue de la coiffe et un aspect esthétique au siège, on forme de façon courante, sur la face externe du siège sur laquelle vient s'appuyer l'utilisateur, des parties en creux obtenues par un rappel de la coiffe vers la face opposée du siège, c'est-à-dire vers l'intérieur de la matelassure. De tels rappels peuvent être prévus sur le dossier et/ou le coussin.

Ces rappels peuvent par exemple être réalisés au moyen d'une bande de toile repliée appelée tresse, fixée par piqûre à la coiffe et dans laquelle est passée une tringle dont les deux extrémités sont fixées à l'armature par l'intermédiaire de chaînettes munies d'une agrafe à leur extrémité. Toutefois, la réalisation et la mise en place de tels rappels comportant un grand nombre de pièces constituent une opération longue et délicate qui doit être exécutée par une main d'oeuvre spécialisée.

On a également proposé, dans la demande de brevet français FR—A—2 593 052 déposée par la Demanderesse, de constituer les moyens de rappel par une pièce monobloc comportant une partie déformable par compression et une partie munie de moyens de fixation dans la matelassure ou sur l'armature. Une telle pièce monobloc qui n'oppose pas de résistance à la compression quand une personne s'assied sur le siège et qui résiste à la traction pour la mise en place de la coiffe, lors de la fabrication du siège, est d'une réalisation difficile et nécessite, lors de la fabrication du siège, une traction sur la pièce mettant en oeuvre des outillages spéciaux.

On connaît également, par le US—A—3.794.378, un moyen de rappel réalisé sous forme monobloc d'une structure plus simple. Cependant, le moyen de rappel présente une certaine rigidité à la compression, si bien que le confort de l'utilisateur du siège se trouve diminué et que le siège risque d'être détérioré par ce moyen de rappel. De plus, le moyen de rappel comporte un dispositif d'accrochage profilé constituant son rebord inférieur qui doit être engagé dans un élément profilé correspondant solidaire de la structure du siège, suivant toute sa longueur. La fixation du moyen de rappel de la coiffe est donc une opération relativement complexe.

Le but de l'invention est donc de proposer un siège, notamment un siège pour véhicule automobile, comportant un coussin et un dossier, chacun pourvu d'une matelassure recouverte d'une coiffe et comportant, de façon habituelle, une armature et/ou des inserts rigides de renforcement placés dans la matelassure, l'un au moins des deux éléments constitutifs, à savoir le coussin et le dossier, étant équipé d'au moins un moyen de rappel de la coiffe en direction de la matelassure pour former des parties en creux sur la face externe du siège sur laquelle vient s'appuyer l'utilisateur, le moyen de rappel étant constitué par une bande de toile fixée à la coiffe au voisinage de l'un de ses bords et reliée le long de son bord opposé à un élément rigide lui-même rappelé vers la matelassure par une pluralité de moyens d'accrochage, ce siège pouvant être fabriqué de façon simple et rapide et pour un prix de revient faible.

Dans ce but, la bande de toile est solidaire de l'élément rigide réalisé sous la forme d'une poutre en une matière plastique dans laquelle la bande de toile est enrobée et prise le long de son bord opposé à la coiffe pour constituer avec cette poutre une seule pièce souple ayant un bord rigide et les moyens d'accrochage sont répartis de manière espacée suivant la longueur de la poutre, pour coopérer avec au moins un élément de fixation associé à la matelassure ou à l'armature.

De manière avantageuse, l'élément de fixation est constitué par un insert réalisé sous la forme d'un réseau de fils placé à l'intérieur de la matelassure, la matelassure comporte au moins une ouverture ou puits, pour l'introduction et le guidage des moyens d'accrochage et ces moyens d'accrochage ont une forme et une dimension permettant leur introduction par pression et leur retenue dans le réseau de fils de l'insert.

Afin de bien faire comprendre l'invention, on va maintenant décrire, à titre d'exemples non limitatifs, plusieurs modes de réalisation d'un siège pour véhicule automobile suivant l'invention, en se référant aux figures jointes en annexe.

Dans ces figures:

la figure 1 est une vue en perspective et en coupe d'un siège comportant plusieurs parties en creux formées par des moyens de rappel de la coiffe suivant l'invention;

la figure 2 est une vue en perspective agrandie, avec arrachement, d'un moyen de rappel de la coiffe et d'un élément de fixation de ce moyen de rappel constitué par un insert placé dans la matelassure;

la figure 3 est une vue de face en élévation de la partie inférieure du moyen de rappel représenté sur la figure 2, suivant un premier mode de réalisation;

la figure 4 est une vue en coupe suivant IV—IV de la figure 3;

la figure 5 est une vue de face en élévation de la partie inférieure d'un moyen de rappel suivant un second mode de réalisation;

la figure 6 est une vue en coupe suivant VI—VI de la figure 5;

la figure 7 est une vue en coupe analogue à la figure 6, d'une variante de réalisation des moyens d'accrochage du dispositif de rappel représenté sur la figure 5;

la figure 8 est une vue de face en élévation de la partie inférieure d'un dispositif de rappel, suivant un troisième mode de réalisation;

la figure 9 est une vue en coupe suivant IX—IX de la figure 8;

la figure 10 est une vue en coupe analogue à la figure 9 d'une variante de réalisation des moyens d'accrochage du dispositif de rappel représenté sur la figure 8.

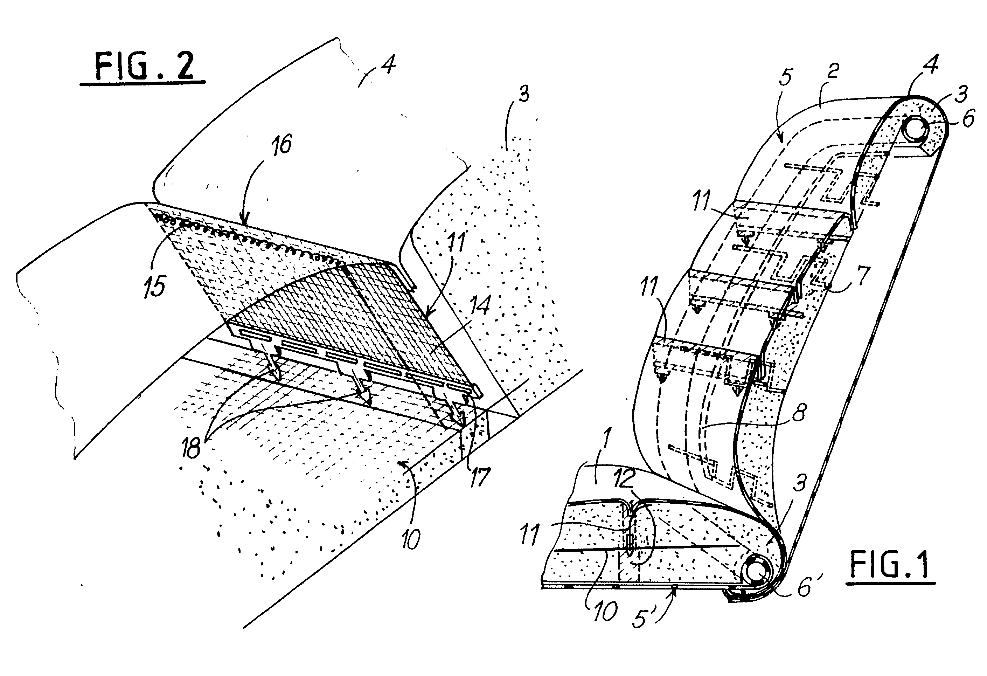

Sur la figure 1, on voit un siège pour véhicule automobile comportant un coussin 1 sur lequel on s'assied et un dossier 2. Chacune des deux parties 1 et 2 du siège comporte une matelassure 3 recouverte d'une coiffe 4. La matelassure 3 est renforcée par une armature 5 en ce qui concerne le dossier 2. Cette armature 5 comporte une partie tubulaire rigide 6, des fils 7 de direction transversale pliés en créneaux et des éléments de renforcement longitudinaux 8. Le coussin 1 du siège comporte un ensemble de renforcement 5' analogue comportant une partie tubulaire rigide 6'.

On a de plus représenté, à l'intérieur de la matelassure 3 du coussin 1, un insert 10 constitué par une toile polyamide noyée à l'intérieur de la matelassure et occupant toute la surface du siège. Bien qu'il n'ait pas été représenté sur la figure 1, un insert analogue est disposé à l'intérieur de la matelassure 3 du dossier 2.

On a également représenté sur la figure 1, un ensemble de dispositifs de rappel 11 suivant l'invention qui seront décrits plus en détail en se référant à la figure 2.

Ainsi qu'il est visible sur la figure 1, la matelassure 3 du coussin 1 est interrompue au niveau du moyen de rappel 11 pour permettre son introduction dans l'épaisseur du siège et sa fixation sur l'insert 10. Des puits 12 permettent l'introduction et le guidage des moyens d'accrochage associés aux moyens de rappel 11.

Comme il est visible sur la figure 2, le moyen de rappel désigné de façon générale par le repère 11 est constitué par une bande de toile 14 fixée au niveau de son bord supérieur à la coiffe 4 du siège, le long d'un repli ou d'un raccord bord à bord de cette coiffe, pour constituer une partie en creux 16, par rappel de la coiffe vers l'intérieur de la matelassure 3.

Le bord inférieur de la toile 14 est rendu solidaire d'une poutre rigide 17 portant les moyens d'accrochage 18 du moyen de rappel.

La bande de toile 14 peut être constituée par un morceau de toile de coton, de nylon ou de tout autre textile naturel ou synthétique ayant une résistance suffisante et pouvant être enrobé et solidarisé dans la matière fusible constituant la poutre 17. La toile 14 peut être tricotée ou tissée ou encore obtenue par tout autre procédé d'assemblage de fils textiles.

La matière fusible de la poutre 17 est généralement une matière plastique et la liaison de cette poutre 17 et de la toile 14 peut être obtenue par surmoulage.

La toile 14 peut être reliée à la coiffe 4 par piqûre suivant une ligne de jonction cousue 15.

Suivant la nature de la toile 14 et de la coiffe, cette jonction pourrait être également réalisée par soudure, collage ou agrafage.

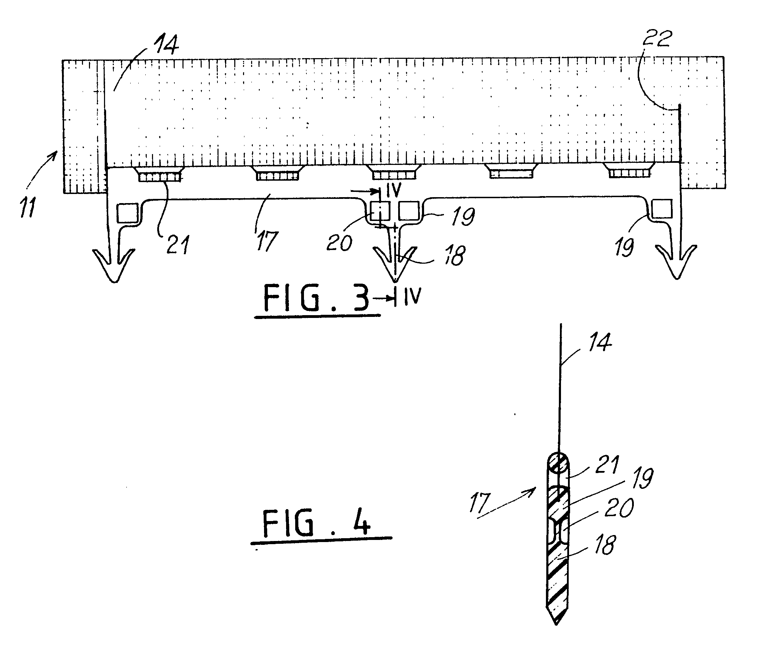

Sur les figures 3 et 4, on voit un premier mode de réalisation de la poutre 17 et des moyens d'accrochage 18 qui sont constitués par des tiges dont l'extrémité est en forme d'ancre de marine. La poutre 17 et les moyens d'accrochage 18 sont réalisés en une seule pièce par moulage d'une matière plastique qui peut être avantageusement du polypropylène. Préalablement au moulage, un bord de la bande de toile 14 est introduit dans le moule, si bien que ce bord se trouve enrobé par la matière plastique et solidarisé, au moment du refroidissement, avec la poutre 17 et les moyens d'accrochage 18. Le moyen de rappel 11 est ainsi réalisé sous la forme d'une pièce unique comportant une bande de toile souple et un bord rigide muni de moyens d'accrochage.

Comme il est visible sur les figures 3 et 4, les moyens d'accrochage 18 sont reliés à la poutre 17 par l'intermédiaire d'une partie élargie 19 dans laquelle sont prévues des parties en creux 20 permettant de faciliter la prise du bord rigide du dispositif de rappel, pour réaliser son accrochage, lors de la fabrication du siège. Des ouvertures 21 sont également formées au moulage dans la poutre 17, ce qui facilite le moulage et la fixation du bord de la toile 14.

La toile de polyamide constituant l'insert 10 présente un maillage et une tenue suffisante pour permettre l'introduction et l'agrafage de l'extrémité des tiges 18 en forme d'ancre de marine.

Cet insert 10 pourrait être également constitué par une toile de coton ou par tout autre réseau de fils ayant une résistance suffisante et assemblés pour constituer des mailles permettant l'accrochage de l'extrémité des tiges 18.

Lors de la fabrication du siège, la fixation et la mise en tension de la coiffe 4 sont assurées par les moyens de rappel 11 qui sont solidarisés à la coiffe 4 le long de leur bord opposé au bord rigide constitué par la poutre 17. On réalise l'engagement des tiges d'accrochage 18, par leur extrémité en forme d'ancre de marine, dans les puits 12 ménagés dans la matelassure 3, par simple pression sur la poutre 17 qui peut être tenue entre le pouce et l'index, au niveau des parties en creux 20 des élargissements 19. La retenue de la poutre 17 et donc du moyen de rappel 11 est assurée par les mailles de l'insert 10 dans lesquelles ont pénétré les extrémités des tiges 18.

La toile 14 comporte de façon complémentaire des fentes 22 à chacune des extrémités de la poutre 17, pour permettre de replier la toile 14 et de fixer ses bords sur les parties latérales du repli ou des extrémités de la coiffe formant la partie en creux 16.

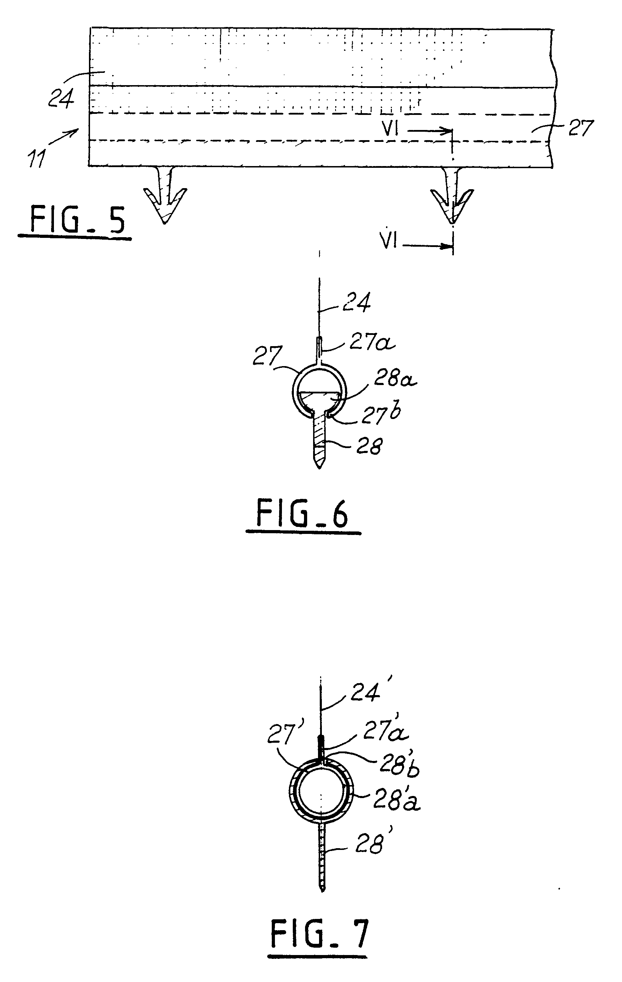

Sur les figures 5 et 6, on voit un second mode de réalisation d'un moyen de rappel 11 dont la toile 24 est rendue solidaire d'une poutre en matière plastique 27 de forme globalement tubulaire et comportant un prolongement plan 27a dans lequel est fixé le bord inférieur de la toile 24.

Alors que la poutre 17 du moyen de rappel représenté sur les figures 3 et 4 était fabriquée par moulage par injection, la toile 14 étant solidarisée à la poutre par surmoulage, la poutre 27 du mode de réalisation des figures 5 et 6 est réalisée par extrusion d'un profilé en matière plastique dont la forme est visible sur la figure 6. A la sortie de la filière d'extrusion, un bord de la toile 24 est introduit et enrobé dans la matière plastique en fusion constituant la partie plate 27a. Au refroidissement, la toile 24 est ainsi solidarisée à la poutre 27.

Ce procédé ne permet cependant pas de réaliser en une seule opération la poutre 27 et les moyens d'accrochage 28 qui sont constitués comme précédemment par une tige terminée par un dispositif d'accrochage en forme d'ancre de marine. Ces moyens d'accrochage 28 répartis suivant la longueur de la poutre 27 sont donc rapportés à l'intérieur de cette poutre qui comporte une fente 27b sur toute sa longueur à sa partie inférieure. Ceci permet d'introduire dans la poutre 27 une pièce en matière plastique moulée ayant une section 28a en forme de demi-rond visible sur la figure 6 et solidaire des tiges 28 formées lors de l'opération de moulage.

Sur la figure 7, on voit une variante de réalisation de l'ensemble constitué par la poutre et les moyens d'accrochage, la poutre 27' étant entièrement fermée et les moyens d'accrochage 28' étant solidaires d'un profilé tubulaire 28' a comportant une fente 28'b permettant d'enfiler le profilé 28'a sur la poutre 27' dont la partie plate 27'a solidarisée à la toile 24' est introduite par glissement dans la fente 28'b.

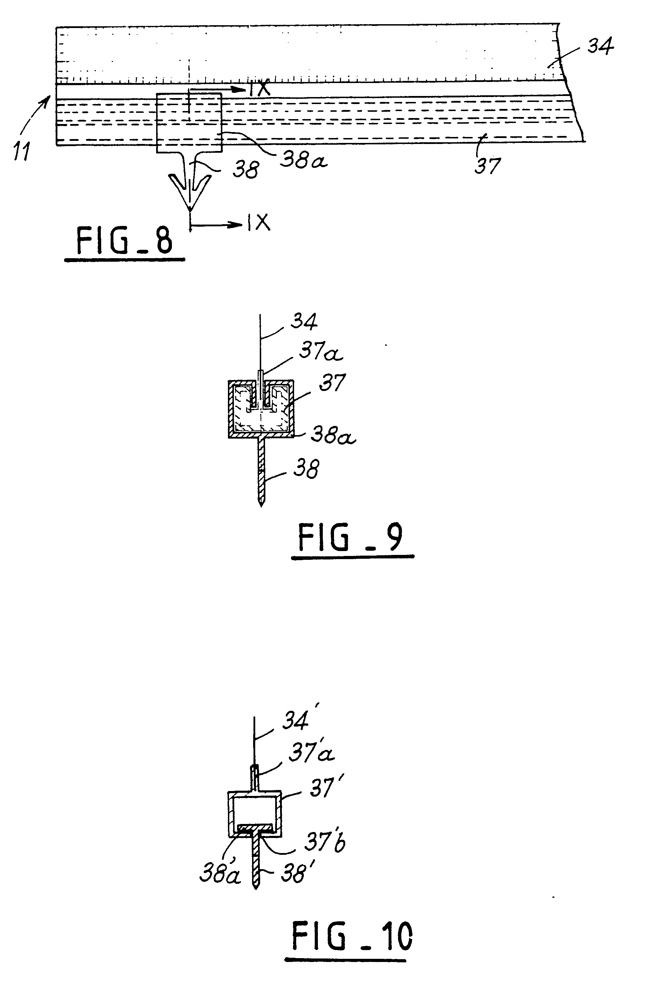

Sur les figure 8 et 9, on voit un troisième mode de réalisation du moyen de rappel qui comporte une toile 34 solidarisée à une poutre 37 en matière plastique réalisée par extrusion, la toile 34 étant introduite, à la sortie de la filière d'extrusion, dans un prolongement 37a de forme plate de la poutre 37 ayant une section de forme globale carrée. De part et d'autre de la partie plate 37a, la poutre 37 délimite des cavités dans lesquelles on peut introduire deux bords de guidage et de maintien d'une section profilée 38a constituant le support d'un moyen d'accrochage 38. Le moyen d'accrochage 38 est constitué comme précédemment par une tige terminée par une extrémité d'accrochage en forme d'ancre de marine. La tige 38 est formée par moulage en une seule pièce avec le support 38a qui comporte une forme globalement carrée, une section intérieure d'une dimension un peu supérieure à la dimension de la poutre 37 et deux bords dirigés vers l'intérieur pour permettre le guidage du support 38a sur la poutre 37.

Les moyens d'accrochage 38 rapportés sur la poutre 37 peuvent être enfilés sur celle-ci, disposés par glissement sur cette poutre de façon à être répartis suivant sa longueur, puis fixés en place.

Sur la figure 10, on voit une variante de réalisation du moyen de rappel représenté sur les figures 8 et 9, la poutre 37' de forme carrée ayant une fente 37'b dans sa paroi inférieure pour permettre l'introduction et la mise en place des dispositifs d'accrochage 38'. Ces dispositifs d'accrochage 38' sont constitués par une tige terminée par une ancre de marine et solidaire d'une partie plate 38'a. La toile 34' est solidarisée à la sortie de la filière d'extrusion à la poutre 37', à l'intérieur d'une partie plate 37'a.

Il est bien évident que lors du montage du siège, les moyens de rappel 11 représentés aux figures 5 à 10 pourront être utilisés de la même façon que celui représenté aux figures 3 et 4.

Dans tous les cas, la mise en place du moyen de rappel assurant la formation de parties en creux dans la coiffe est réalisée très rapidement et très simplement par simple pression sur la poutre rigide et les moyens d'accrochage qui s'engagent dans des puits et sont retenus par le réseau d'un insert. On évite ainsi l'utilisation d'outillages nécessaires pour tirer sur la toile lors de la mise en place du moyen de rappel.

Lors de l'utilisation du siège, les bandes de toile souple se déforment librement en compression, contribuant ainsi au confort du siège.

Le siège suivant l'invention a l'avantage de pouvoir être fabriqué par des opérations simples et rapides, la mise en place des moyens de rappel étant effectuée par simple pression, sans faire intervenir de dispositifs d'accrochage annexes. Les moyens de rappel sont réalisés sous forme d'une seule pièce comportant une partie souple permettant sa compression et un bord rigide. Le siège a un très bon aspect esthétique et présente un très grand confort, malgré un prix de revient très inférieur aux sièges connus de l'art antérieur présentant des qualités esthétiques et de confort comparables.

L'invention ne se limite pas aux modes de réalisation qui ont été décrits.

C'est ainsi qu'on peut imaginer des dispositifs d'accrochage ayant une forme différente d'une tige terminée par une ancre de marine. Ces dispositifs d'accrochage peuvent coopérer avec un élément de fixation différent d'un insert constitué par un réseau à l'intérieur de la matelassure. L'élément de fixation peut être constitué par une partie de l'armature du siège ou par un moyen d'accrochage rapporté sur cette armature. Cette armature peut d'ailleurs être différente de celle qui a été décrite.

Les éléments d'accrochage peuvent revêtir toutes les formes décrites dans la demande de brevet no. 86-00934 des Demanderesses. Le mode d'accrochage utilisant un insert et des puits dans la matelassure présente cependant un avantage en ce qui concerne la facilité de pose des moyens de rappel.

On peut imaginer l'utilisation de toute matière appropriée pour constituer la toile, la poutre, les moyens d'accrochage et l'insert introduit dans la matelassure.

Enfin, l'invention s'applique à des sièges différents de sièges destinés à des véhicules automobiles.

## Revendications

1. Siège, notamment siège pour véhicule automobile, comportant un coussin (1) et un dossier (2), chacun pourvu d'une matelassure (3) recouverte d'une coiffe (4) et comportant de façon habituelle, une armature (5) et/ou des inserts rigides de renforcement placés dans la matelassure (3), l'un au moins des deux éléments constitutifs, à savoir le coussin (1) et le dossier (2), étant équipé d'au moins un moyen de rappel (11) de la coiffe (4) en direction de la matelassure (3) pour former une partie en creux (16) sur la face externe du siège sur laquelle vient s'appuyer l'utilisateur, caractérisé en ce que le moyen de rappel est constitué par une bande de toile (14, 24, 34) fixée à la coiffe (4) au voisinage de l'un de ses bords et reliée le long de son bord opposé à un élément rigide (17, 27, 37) lui-même rappelé vers la matelassure (3) par une pluralité de moyens d'accrochage (18, 28, 38), que la bande de toile (14, 24, 34) est solidaire de l'élément rigide (17, 27, 37) réalisé sous la forme d'une poutre en une matière plastique dans laquelle la bande de toile (14, 24, 34) est enrobée et prise le long de son bord opposé à la coiffe, pour constituer avec cette poutre une seule pièce souple ayant un bord rigide, et que les moyens d'accrochage (18, 28, 38) sont répartis de manière espacée suivant la longueur de la poutre (17, 27, 37) pour coopérer avec au moins un élément de fixation (10) associé à la matelassure (3) ou à l'armature (5).

2. Siège suivant la revendication 1, caractérisé par le fait que la poutre rigide (17) est réalisée sous forme d'une pièce unique avec les moyens d'accrochage (18), par une opération de moulage par injection, la toile (14) étant fixée à la poutre (17) par surmoulage.

3. Siège suivant la revendication 1, caractérisé par le fait que la poutre rigide (27, 37) est réalisée par extrusion d'une matière plastique, la toile (24, 34) étant enrobée dans la matière plastique à la sortie de la filière d'extrusion et les dispositifs d'accrochage (28, 38) étant rapportés sur la poutre (27, 37).

4. Siège suivant l'une quelconque des revendications 1, 2 et 3, caractérisé par le fait que la poutre (17, 27, 37) est en polypropylène.

5. Siège suivant l'une quelconque des revendications 1 à 4, caractérisé par le fait que l'élément de fixation (10) est constitué par un insert réalisé sous la forme d'un réseau de fils placé à l'intérieur de la matelassure (3), que la matelassure (3) comporte au moins une ouverture ou puits (12) pour l'introduction et le guidage des moyens d'accrochage (18, 28, 38) et que les moyens d'accrochage ont une forme et une dimension permettant leur introduction par pression et leur retenue dans le réseau de fils de l'insert (10).

6. Siège suivant la revendication 5, caractérisé par le fait que les moyens d'accrochage (18, 28, 38) sont constitués par une tige dont l'extrémité d'accrochage a la forme d'une ancre de marine.

7. Siège suivant l'une quelconque des revendications 5 et 6, caractérisé par le fait que l'insert (10) est constitué par une toile en polyamide.

## Patentansprüche

1. Sitz, insbesondere für ein Kraftfahrzeug, mit einem Sitzkissen (1) und einer Rückenlehne (2), jeweils versehen mit einer Polsterung (3), die von einem Überzug (4) überdeckt ist, und auf herkömmliche Weise mit einer Armatur (5) und/oder starren Verstärkungseinsätzen versehen ist, die in der Polsterung (3) angeordnet sind, wobei wenigstens eines der beiden Aufbauelemente, nämlich das Kissen (1) und die Rückenlehne (2), mit wenigstens einer Rückhalteeinrichtung (11) des Überzugs (4) in Richtung auf die Polsterung (3) versehen ist, um einen Vertiefungsbereich (16) auf der Außenseite des Sitzes zu bilden, auf die der Verwender sich abstützt, dadurch gekennzeichnet, daß die Rückhalteeinrichtung aus einem Stoffband (14, 24, 34) gebildet wird, das an dem Überzug (4) in der Nähe eines seiner Ränder befestigt ist und entlang seines gegenüberliegenden Endes mit einem steifen Element (17, 27, 37) verbunden ist, was selbst von der Polsterung (3) durch eine Mehrzahl von Hakeneinrichtungen (18, 28, 38) zurückgehalten wird, daß das Stoffband (14, 24, 34) mit dem steifen Element (17, 27, 37) verbunden ist, das in Form eines Balkens oder einer Strebe aus einem Kunststoffmaterial vorliegt, in den das Stoffband (14, 24, 34) eingebettet ist und entlang seines dem Überzug gegenüberliegenden Randes aufgenommen ist, um mit diesem Balken ein einziges nachgiebiges Teil zu bilden, das einen starren Rand hat, und daß die Hakeneinrichtungen (18, 28, 38) auf beabstandete Weise entlang der Länge des Balkens (17, 27, 37) verteilt sind, um mit wenigstens einem Befestigungselement (10) zusammenzuwirken, das der Polsterung (3) oder der Armatur (5) zugeordnet ist.

2. Sitz nach Anspruch 1, dadurch gekennzeichnet, daß der starre Balken (17) als einstückiges Teil mit den Hakeneinrichtungen (18) ausgebildet ist durch einen Spritzformvorgang, wobei der Stoff (14) durch Anformen an den Balken (17) befestigt ist.

3. Sitz nach Anspruch 1, dadurch gekennzeichnet, daß der starre Balken (27, 37) durch Extrudieren eines Kunststoffmaterials erzeugt wird, wobei der Stoff (24, 34) in das Kunststoffmaterial am Ausgang der Extrusionsdüse eingebettet wird, und die Hakeneinrichtung (28, 38) auf dem Balken (27, 37) angebracht wird.

4. Sitz nach einem der Ansprüche 1 bis 3, dadurch gekennzeichnet, daß der Balken (17, 27, 37) aus Polypropylen gebildet ist.

5. Sitz nach einem der Ansprüche 1 bis 4, dadurch gekennzeichnet, daß das Befestigungselement (10) aus einem Einsatz gebildet ist, der in Form eines Fadennetzes erzeugt wrid, das im Inneren der Polterung (3) angeordnet ist, daß die Polsterung (3) wenigstens eine Öffnung oder Bohrungen (12) für das Einführen und das Führen der Hakeneinrichtungen (18, 28, 38) aufweist, und daß die Hakeneinrichtungen eine Form und eine Abmessung haben, die ihr Einführen unter Druck und ihr Halten in dem Fadennetz des Einsatzes (10) erlauben.

6. Sitz nach Anspruch 5, dadurch gekennzeichnet, daß die Hakeneinrichtungen (18, 28, 38) aus einer Stange gebildet sind, dessen Hakenende die Form eines Schiffsankers aufweist.

7. Sitz nach einem der Ansprüche 5 oder 6, dadurch gekennzeichnet, daß der Einsatz (10) aus einem Stoff bzw. Tuch aus Polyamid gebildet ist.

**Claims**

1. Seat, particularly a seat for a motor vehicle, comprising a cushion (1) and a backrest (2), each having a padding (3) with a cover (4) and comprising, in the usual manner, a frame (5) and/or rigid reinforcing inserts placed in the padding (3), at least one of the component parts, namely the cushion (1) and the backrest (2), being equipped with at least one means (11) of pulling the cover (4) back in the direction of the padding (3) so as to form a hollow part (16) on the external face of the seat against which the user rests, characterised in that the means of pulling back is formed by a strip of cloth (14, 24, 34) secured to the cover (4) close to one of its edges and connected along its opposite edge to a rigid member (17, 27, 37) itself pulled back towards the padding (3) by a plurality of means of engagement (18, 28, 38), in that the strip of cloth (14, 24, 34) is secured to the rigid member (17, 27, 37) produced in the form of a beam made from a plastic material in which the strip of cloth (14, 24, 34) is embedded and held along its edge opposite to the cover, in order to form with this beam a single flexible piece with a rigid edge, and in that the means of engagement (18, 28, 38) are distributed so as to be spaced out along the length of the beam (17, 27, 37) so as to interact with at least one fixing member (10) attached to the padding (3) or the frame (5).

2. Seat according to Claim 1, characterized by the fact that the rigid beam (17) is produced in the form of a single piece with the means of engagement (18), by an injection moulding operation, the cloth (14) being fixed to the beam (17) by moulding.

3. Seat according to Claim 1, characterised by the fact that the rigid beam (27, 37) is produced by extrusion of a plastic material, the cloth (24, 34) being embedded in the plastic material at the discharge from the extrusion die and the engagement devices (28, 38) being attached to the beam (27, 37).

4. Seat according to any one of Claims 1, 2 and 3, characterised by the fact that the beam (17, 27, 37) is made from polypropylene.

5. Seat according to any one of Claims 1 to 4, characterised by the fact that the fixing member (10) is formed by an insert produced in the form of a lattice of wires placed inside the padding (3), that the padding (3) has at least one opening or well (12) for inserting and guiding the means of engagement (18, 28, 38) and that the means of engagement have a shape and size which enable them to be inserted by pressing and to be held in the wire lattice of the insert (10).

6. Seat according to Claim 5, characterised by the fact that the means of engagement (18, 28, 38) are formed by a shank whose attaching end is in the shape of an anchor.

7. Seat according to either one of Claims 5 and 6, characterised by the fact that the insert (10) is formed by a polyamide cloth.

FIG. 2

FIG.1

EP 0 240 388 B1

FIG. 3

FIG. 4

EP 0 240 388 B1

FIG. 5

FIG. 6

FIG. 7

3

FIG_8

FIG _9

FIG _10

4